# EUROPÄISCHE PATENTANMELDUNG

(11) **EP 2 824 405 A2**
(43) Veröffentlichungstag der Anmeldung: **14.01.2015**
(21) Anmeldenummer: 14172462.5
(22) Anmeldetag: 16.06.2014
(51) Int. Cl.: F25D 23/06

(54) **Hochleistungs-Thermopaneel**

(30) Priorität: 11.07.2013 CH 12422013
(71) Anmelder: Seven-Air Gebr. Meyer AG, 6285 Hitzkirch (CH)
(72) Erfinder: Felix Urs, 6285 Hitzkirch (CH); Sommer Paul, 6017 Ruswil (CH); Troesch Roger, 6284 Sulz (CH)
(74) Vertreter: Rigling, Peter Daniel

(57) **Zusammenfassung**

Eine isolierende, druckfeste Wandung (1) wird durch mindestens zwei Wandbleche (3,7) mit einem isolierenden Zwischenraum gebildet, wobei im Zwischenraum ein Element in Platten- oder Mattenform (13) angeordnet ist und im Zwischenraum (15) ausfüllend eingeschäumt ist, wobei das Element (13) eine tiefere Wärmeleitzahl aufweist als der Schaum.

## Beschreibung

Die vorliegende Erfindung betrifft eine wärmeisolierende Wandung gemäss dem Oberbegriff nach Anspruch 1 sowie ein Verfahren zu deren Herstellung.

Im Zuge der Energie-Effizienz wird ebenfalls der Wärmedämmung bzw. der Wärmeisolation erhöhtes Gewicht beigemessen. Die Anforderungen an die Isolation von Klima- und Lüftungsgeräten, Klimakästen, Kühlschränken, Trockenschränken und dergleichen werden stets erhöht, was in der Regel mit grösseren Wandstärken der Wandungen der Isolation einhergeht.

Bekannt ist beispielsweise eine wärmeisolierende Doppelwandung aus der EP 1 143 215 (Thermopaneel), wo mit einer ausgeschäumten Wandung auch der seitlichen Ausgestaltung der Wandelemente zur Verhinderung von sogenannten Kältebrücken grösstes Gewicht beigemessen wird.

Der geforderte tiefe U-Wert, respektive die tiefe Wärmedurchgangszahl ist mit den bis heute entwickelten ausgeschäumten Paneelen wie in der EP 1 143 215 vorgeschlagen nur mit dickeren Isolationsstärken von mindestens 60 mm und mehr zu erreichen. Dadurch werden konstruktionsgerechte Lösungen im Gehäusebau für Klima- und Lüftungsgeräten massiv erschwert, respektive eine marktgerechte Konstruktion wird verunmöglicht.

Die Aufgabe der vorliegenden Erfindung besteht somit darin, ein druckfestes Wandelement vorzuschlagen, mittels welchem die erhöhten Isolationswerte, d.h. die tiefe Wärmedurchgangszahl, erzielt werden kann. Erfindungsgemäss vorgeschlagen wird eine isolierende Wandung gemäss dem Wortlaut nach Anspruch 1.

Vorgeschlagen wird, dass in der Wandung, welche in der Regel einen ausgeschäumten Zwischenraum zwischen zwei Wandblechen aufweist zusätzlich ein Isolationselement in Platten- oder Mattenform angeordnet ist. Dieses kann ein vakuumiertes Isolationselement, eine Isolationsmatte oder ein ganz anderes Element in Platten- oder Mattenform sein mit einem tieferen Lambda-Wert (Wärmeleitzahl) als der eingebrachte Umhüllungsschaum.

Das Isolationselement kann bspw. aus einem hoch porösen Wärmedämm-Material bestehen mit einem Anteil von Luftporen in der Grössenordnung von 80% - 99%. Diese Luftporen können bspw. in Nanogrösse vorliegen. Als hochporöses Festkörpermaterial sind bspw. sogenannte Aerogele geeignet, bspw. auf Silikatbasis oder auf Kohlenstoffbasis. Aerogele werden in der Regel mittels den sogenannten Sol-Gel-Verfahren synthetisiert. Derartige Isolationselemente können einen Wärmedämm-Wert aufweisen, welcher im Vergleich zu bspw. Polyurethan-Schaum um einen Faktor 2 bis 3 höher liegt.

Gemäss einer weiteren Ausführungsform weist das Isolationselement einen porösen Stützkern auf, welcher mit einer Barrieren-Folie ummantelt bzw. eingehüllt ist, wobei das Element vakuumiert sein kann.

Das Stützkernmaterial des Isolationselementes, weist eine geringe Wärmedurchgangszahl auf, welche niedriger ist als diejenige, des Element umgebenden Schaumes.

Gemäss einer Ausführungsvariante wird vorgeschlagen, dass der Stützkern hochporös ist und in eine Hochbarrierefolie eingeschweisst ist und zu einer bspw. sogenannten Vakuumkammer evakuiert wird.

Wiederum gemäss einer weiteren Ausführungsvariante wird vorgeschlagen, dass der hochporöse Stützkern weitestgehend aus pyrogen amorpher Kieselsäure besteht mit einem Porenraum von mindestens >80 %, vorzugsweise >90 Volumen-%. Als ummantelnde Barrierefolie wird beispielsweise eine Aluminium-Polymerverbundfolie vorgeschlagen oder eine metallisierte mehrschichtige Polymerverbundfolie, oder eine Alu-Polymer-Alu-Verbundfolie.

Der Aufbau der erfindungsgemäss vorgeschlagenen Isolationswandung ist dergestalt, dass das zusätzlich angeordnete Isolationselement wenigstens 50 % der Wandungsfläche, vorzugsweise mehr als 70 % der Fläche einnimmt und der Rest des Zwischenraumes mit üblicherweise zu Wärmeisolationszwecken verwendetem Schaum wie insbesondere Polyurethanschaum ausgeschäumt ist. Auch die Wandstärke des zusätzlich eingebrachten Isolationselementes soll mindestens ¼ vorzugsweise ca. 30% - 60% der Wandung der wärmeisolierenden Wandung ausmachen.

Zur Herstellung der erfindungsgemässen Wandung werden zwei Wandbleche beispielsweise aus einem metallenen Werkstoff verwendet, welche beispielsweise umgebogene Randbereiche aufweisen, wie beispielsweise beschrieben in der EP1143215. Am einen Wandblech wird an der dem Zwischenraum zugewandten Seite das zusätzliche Isolations-Element mit niedriger Wärmeleitfähigkeit angeordnet, wie beispielsweise aufgeklebt. Anschliessend werden die beiden Bleche im Randbereich zusammengefügt, beispielsweise über Verbindungselemente aus einem wärmeisolierenden Polymermaterial, zur Bildung des Zwischenraumes zwischen den beiden Blechen. Dieser Zwischenraum wird schliesslich, das zusätzliche Isolationselement einschliessend ausgeschäumt, beispielsweise mittels eines Polyurethanschaumes. Selbstverständlich kann auch ein anderer Schaum verwendet werden, welcher eine niedrige Wärmeleitfähigkeit und eine hohe Druckfestigkeit aufweist. Auch an Stelle der beiden Metallbleche können selbstverständlich auch dünnwandige Platten aus einem Polymer verwendet werden, wie beispielsweise verstärkte Polymerplatten.

Die Erfindung wird nun beispielsweise und unter Bezug auf die beigefügten Figuren näher erläutert.

Dabei zeigen:
- Figur 1: In Perspektive schematisch einen Abschnitt einer erfindungsgemässen wärmeisolierenden Wandung und
- Figur 2: Einen Schnitt durch die wärmeisolierende Wandung.

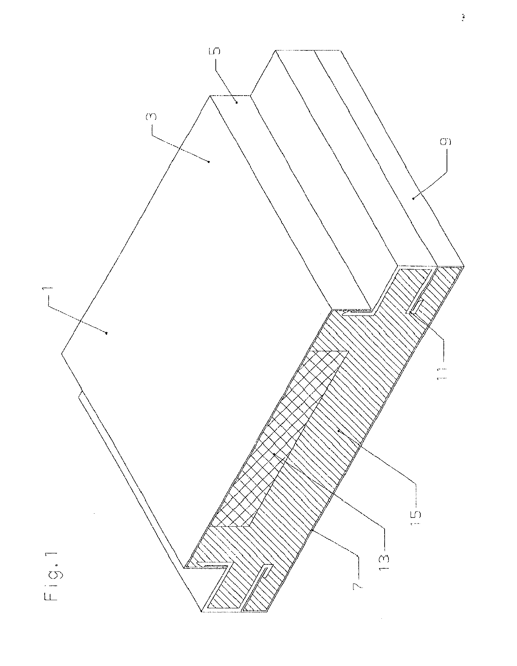

Figur 1 zeigt schematisch in Perspektive einen Teil einer erfindungsgemässen wärmeisolierenden Wandung 1, aufweisend eine äussere Wandung bzw. ein äusseres Blech 7 und eine innere Wandung bzw. ein inneres Blech 3, je gebildet beispielsweise durch ein Metallblech. Im Randbereich der Wandung 1 weist das äussere Wandblech 7 eine seitliche U-förmige Umkragung 9 auf, während dem die innere Wandung 3 im Randbereich 5 lediglich umgebogen ist. Die beiden umgebogenen Endkanten 5 und 9 werden durch ein isolierendes Verbindungselement 11 gehalten, beispielsweise bestehend aus einem gut wärmeisolierenden Polymermaterial.

Im durch die beiden Wandbleche 3 und 7 gebildeten Zwischenraum ist einerseits das erfindungsgemäss zusätzlich vorgeschlagene Isolationselement, wie bspw. ein, einen porösen Stützkern aufweisendes ummanteltes Isolationselement oder Paneel 13 angeordnet, welches, wie in Figur 1 dargestellt, an der inneren Wandung 3 fest angeordnet ist, wie beispielsweise angeklebt. Der Rest des Zwischenraumes 15 zwischen den beiden Wandblechen 3 und 7 ist ausgeschäumt, beispielsweise mittels eines Polyurethanschaumes.

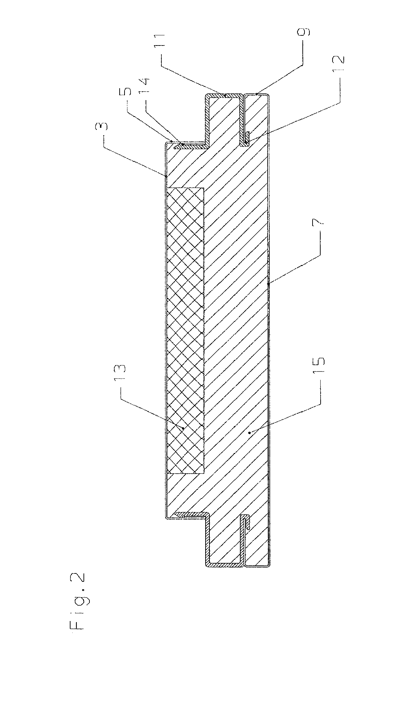

Figur 2 zeigt das Wandelement 1 im Schnitt, wobei wiederum primär die beiden Wandbleche 3 und 7 das Element innen und aussen begrenzend angeordnet sind. Die seitlichen Umkragungen für 5 und 9 der beiden Wandbleche 3 und 7 sind mittels einem wärmeisolierenden Element 11 verbunden, wobei im Bereich der U-förmigen Kragung 9 das Verbindungselement, ebenfalls U-förmig umgebogen, im Bereich 12 angebracht ist. Am entgegengesetzten Ende des Verbindungselementes 11 besitzt dieses eine Auskragung 14, welche in einem am Wandbereich 5 vorgesehenen umgebogenen Bereich einklickt.

Am inneren Wandblech 3 ist nun das erfindungsgemässe, zusätzliche Isolationselementwie ein Vakuumisolationspaneel 13 fest angeordnet, wie beispielsweise angeklebt. Wie auf Figur 2 deutlich erkennbar, erstreckt sich das zusätzliche Isolationselement 13 über weitestgehend die gesamte Fläche des isolierenden Wandelementes, wie beispielsweise über mindestens 70 % der Wandfläche. Selbstverständlich kann das Vakuumisolationselement auch eine noch grössere Fläche einnehmen als wie in Figur 1 und 2 dargestellt. Der Rest des Zwischenraumes 15 zwischen den beiden Wandblechen 3 und 7 ist ausgeschäumt, wie beispielsweise mittels eines Polyurethanschaums. Das im Wandelement verwendete, zusätzliche Isolationselement hat vorzugsweise eine tiefere Wärmeleitzahl als der Polyurethanschaum.

Ein derartiges isolierendes Wandelement kann eine Wandstärke aufweisen von ca. 10mm - 40mm um die geforderten Wärmeisolationswerte zu erzielen.

Das unter Bezug auf die Figuren 1 und 2 dargestellte isolierende Wandelement ist selbstverständlich nur ein Beispiel zur besseren Erläuterung der vorliegenden Erfindung. So ist es auch möglich, das zusätzliche Isolationselement an der äusseren Wandung anzuordnen oder irgendwo innerhalb des Zwischenraumes des Wandelementes und auch die Dimensionierung kann unterschiedlich gewählt werden, je nach Anforderungen an die zu erzielenden Isolationswerte. In der Materialwahl des zusätzlichen Isolationselementes ist man frei, wesentlich ist, dass das Element eine sehr niedrige Wärmeleitzahl aufweist, welche niedriger ist als diejenige des Schaummaterials. Auch statt des beschriebenen Polyurethanschaumes ist die Verwendung anderer Schaummaterialien möglich, wobei wesentlich ist, dass der Schaum selbst ebenfalls eine niedrige Wärmeleitzahl und zudem eine hohe Druckfestigkeit aufweist.

## Patentansprüche

1. Isolierende, druckfeste Wandung gebildet durch mindestens 2 Wandbleche (3,7) mit einem isolierenden Zwischenraum **gekennzeichnet durch** ein im Zwischenraum angeordnetes Element in Platten- oder Mattenform (13), welches im Zwischenraum (15) ausfüllend eingeschäumt ist wobei dieses Element eine tiefere Wärmeleitzahl als der Schaum aufweist.

2. Isolierende, druckfeste Wandung nach Anspruch 1, **dadurch gekennzeichnet, dass** das Element ein vakuumiertes Isolationselement (13), eine Gelaufweisende Matte oder dergleichen ist, wobei die Wärmeleitzahl des Isolationselementes tiefer ist als diejenige des Schaumes.

3. Isolierende, druckfeste Wandung nach einem der Ansprüche 1 oder 2, **dadurch gekennzeichnet, dass** das Wärmedämm-Material des Isolationselementes hochporös ist mit einem Porenvolumen von mindestens 80 Volumen-%, vorzugsweise mindestens 90 Volumen-%.

4. Isolierende, druckfeste Wandung nach einem der Ansprüche 1 bis 3, **dadurch gekennzeichnet, dass** das Wärmedämm-Material des Isolationselementes ein Aerogel aufweist, bspw. auf Silikatbasis oder Kohlenstoffbasis.

5. Isolierende, druckfeste Wandung nach einem der Ansprüche 1 bis 4, **dadurch gekennzeichnet, dass** das Isolationselement einen porösen Kern aufweist, bestehend aus Pyrogen-amorpher Kieselsäure.

6. Isolierende, druckfeste Wandung nach Anspruch 5, **dadurch gekennzeichnet, dass** der poröse Kern in eine Hochbarrierefolie eingeschweisst ist und der Innendruck im Vakuumelement in einem Bereich von 0.1 bis 5mbar liegt.

7. Wandung nach einem der Ansprüche 5 oder 6, **dadurch gekennzeichnet, dass** die Folie eine alu-polymere Verbundfolie ist, eine metallisierte, mehrschichtige Verbundfolie und/oder aus mehreren miteinander verbundenen Kunststofffolien besteht, gebildet aus unterschiedlichen Polymeren, vorzugsweise zusätzlich mit einer Metallfolie laminiert.

8. Isolierende, druckfeste Wandung nach einem der Ansprüche 1 bis 7, **dadurch gekennzeichnet, dass** je die Endkanten (5,9) der beiden Wandbleche umgebogen sind und über ein Thermoprofil (11) aus einem Polymermaterial oder geschäumten Kunststoff mit niedriger Wärmeleitfähigkeit wärmeisolierend miteinander verbunden sind.

9. Verfahren zur Herstellung einer isolierenden Wandung **dadurch gekennzeichnet, dass** zwei Wandbleche beispielsweise aus einem metallenen Werkstoff verwendet werden, zwischen diese Wandbleche ein Isolationselement mit tiefer Wärmeleitzahl angeordnet wird und anschliessend die Randbereiche der beiden Wandbleche mit einem Thermoprofil verbunden werden damit das System verschlossen wird und schliesslich der nun vorhandene Hohlraum das Isolationselement einschäumend ausgefüllt wird
